# EUROPEAN PATENT APPLICATION

(11) **EP 1 583 292 A1**
(43) Date of publication of application: **05.10.2005**
(21) Application number: 04007701.8
(22) Date of filing: 30.03.2004
(51) Int. Cl.: H04L 12/56, H04Q 7/30

(54) **Delayed base station relocation in distributed radio access networks**

(71) Applicant: MATSUSHITA ELECTRIC INDUSTRIAL CO., LTD., Kadoma-shi, Osaka 571-8501 (JP)
(72) Inventor: Petrovic, Dragan, 64295 Darmstadt (DE); Seidel, Eiko, 64285 Darmstadt (DE); Löhr, Joachim, 64287 Darmstadt (DE)
(74) Representative: Grünecker, Kinkeldey, Stockmair & Schwanhäusser Anwaltssozietät

(57) **Abstract**

The present invention relates to a method for relocating control plane functionality of a serving base station in a mobile communication system comprising a mobile terminal and a plurality of base stations. Further, the present invention relates to a base station in a mobile communication system and to the mobile communication system. To tackle potentially intolerable delay of control signaling due to frequent serving network element relocations in the network architecture the present invention suggests a partial relocation of a serving network element wherein the control plane functionality is relocated but connection to the core network via a gateway is maintained through the previous serving network element. A further aspect of the present invention suggests a total relocation, where control plane functionalities are relocated and where a new connection to the core network is established between the new serving network element and the gateway. Also decision criteria on whether to perform partial or total relocation are provided.

## Description

### FIELD OF THE INVENTION

The present invention relates to a method for relocating control plane functionality of a serving base station in a mobile communication system comprising a mobile terminal and a plurality of base stations. Further, the present invention relates to a base station in a mobile communication system and to the mobile communication system.

### TECHNICAL BACKGROUND

W-CDMA (Wideband Code Division Multiple Access) is a radio interface for IMT-2000 (International Mobile Communication), which was standardized for use as the 3^{rd} generation wireless mobile telecommunication system. It provides a variety of services such as voice services and multimedia mobile communication services in a flexible and efficient way. The standardization bodies in Japan, Europe, USA, and other countries have jointly organized a project called the 3^{rd} Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4 and Release 5 and discussion on further improvements is ongoing under the scope of Release 6.

The dedicated channel (DCH) for downlink and uplink and the downlink shared channel (DSCH) have been defined in Release 99 and Release 4. in the following years, the developers recognized that for providing multimedia services - or data services in general - high speed asymmetric access had to be implemented. In Release 5 the high-speed downlink packet access (HSDPA) was introduced. The new high-speed downlink shared channel (HS-DSCH) provides downlink high-speed access to the user from the UMTS Radio Access Network (RAN) to the communication terminals, called user equipments in the UMTS specifications.

### UMTS Architecture

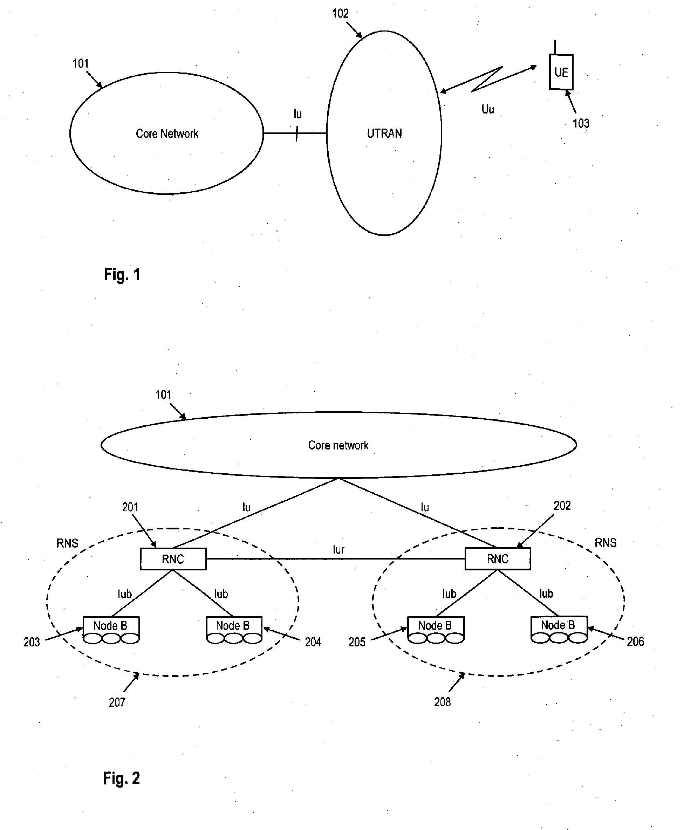

The high level R99/4/5 architecture of Universal Mobile Telecommunication System (UMTS) is shown in Fig. 1 (see 3GPP TR 25.401: "UTRAN Overall Description", available from http://www.3gpp.org). The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of these network elements are defined by open interfaces (lu, Uu). It should be noted that UMTS system is modular and it is therefore possible to have several network elements of the same type.

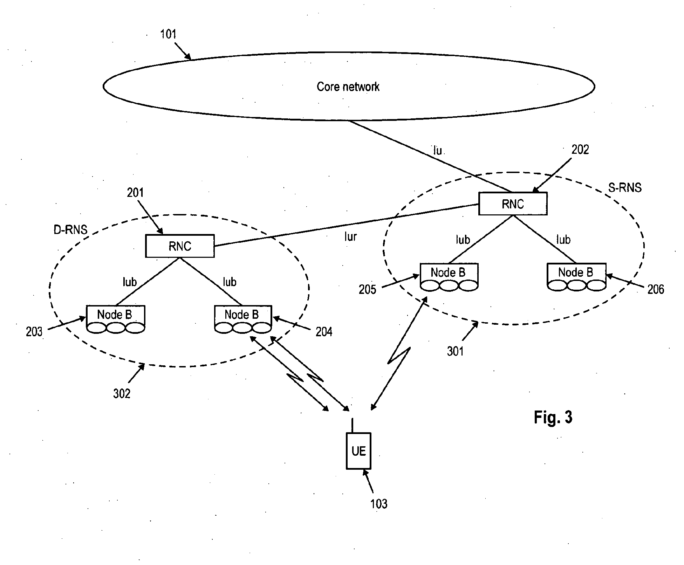

Fig. 2 illustrates the current architecture of UTRAN. A number of Radio Network Controllers (RNCs) 201, 202 are connected to the CN 101. Each RNC 201, 202 controls one or several base stations (Node Bs) 203, 204, 205, 206, which in turn communicate with the user equipments. An RNC controlling several base stations is called Controlling RNC (C-RNC) for these base stations. A set of controlled base stations accompanied by their C-RNC is referred to as Radio Network Subsystem (RNS) 207, 208. For each connection between User Equipment and the UTRAN, one RNS is the Serving RNS (S-RNS). It maintains the so-called lu connection with the Core Network (CN) 101. When required, the Drift RNS 302 (D-RNS) 302 supports the Serving RNS (S-RNS) 301 by providing radio resources as shown in Fig. 3. Respective RNCs are called Serving RNC (S-RNC) and Drift RNC (D-RNC). It is also possible and often the case that C-RNC and D-RNC are identical and therefore abbreviations S-RNC or RNC are used.

Some functions which may be of particular relevance are located in User Plane (UP) and Control Plane (CP) of described network elements are outlined in the following passages.

### RNC: Control plane functions

The Radio Resource Control (RRC) protocol (see 3GPP TSG RAN TS 25.331 "RRC Protocol Specification", V.6.0.1, available at http://www.3gpp.org) on the network side is terminated in the RNC. It comprises following relevant functions:
- Control of Radio Bearers, transport channels and physical channels,
- Measurement control and processing of measurement reports,
- RRC connection mobility functions,
   o Active Set Update,
   o Hard Handover,
   o Cell Update,
   o URA Update and
- Support of SRNS relocation.

The Node B Application Part (NBAP) protocol, Radio Network Subsystem Application Protocol and Radio Access Network Application Part (RANAP) protocol are terminated in RNC at the lub, lur and lu interfaces, respectively. Some of the procedures of these protocols that are used to support RRC functions from above are: Radio Link Setup common NBAP procedure, Radio Link Addition/Deletion dedicated NBAP procedure, Relocation Commit RNSAP mobility procedure, Radio Link Addition / Deletion / Setup RNSAP DCH procedures and Relocation RANAP procedure.

### RNC: User plane functions

RNC terminates MAC and RLC protocols on the network side according to Rel99/4 protocol architecture. The User Plane protocol stack architecture of relevance to Rel5 High Speed Downlink Packet Access (HSDPA) feature will also be provided in the following passages. The settings of these protocols are controlled by RRC.

### Node B: User Plane/Control Plane functions

The physical layer is terminated on the network side in a Node B for an Rel99/4 UMTS architecture. In Rel5, Node B may terminate MAC layer for HS-DSCH transport channel.

Apart from terminating NBAP protocol on the lub interface, there are no control functions in Node B. It should be noted that all of NBAP procedures relevant for this report are initiated from RNC.

### Exemplary User Plane Protocol Stack Architecture in case of HSDPA

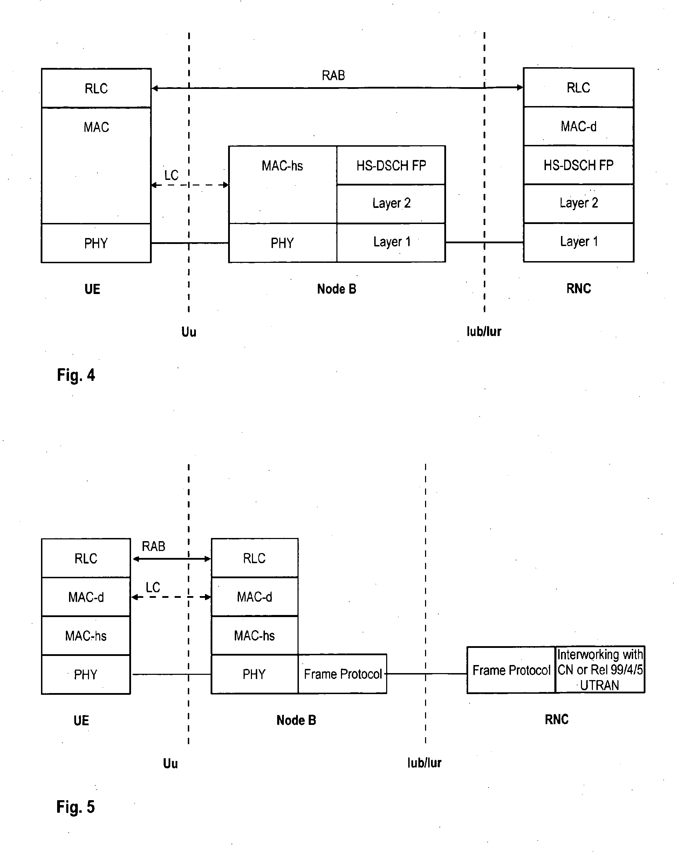

The User Plane Radio Interface Protocol Architecture of HSDPA is shown in the Fig. 4. HARQ protocol and scheduling function belong to MAC-hs sublayer that is distributed across Node B and UE. It should be noted that a selective repeat (SR) Automatic Repeat Request (ARQ) protocol based on sliding window mechanisms could be also established between RNC and UE on the level of RLC sublayer in acknowledged mode. The service that is offered from RLC sublayer for point-to-point connection between CN and UE is referred to as Radio Access Bearer (RAB). Each RAB is subsequently mapped to a service offered from MAC layer. This service is referred to as Logical Channel (LC).

HS-DSCH FP (High Speed Downlink Shared Channel Frame Protocol) is responsible for flow control between Node B and RNC. It determines the capacity that can be granted to RNC for transmitting packets across transport network based on requests obtained from RNC. More specifically, the capacity is requested by CAPACITY REQUEST messages of HS-DSCH FP originating from S-RNC. The permission to transmit certain amount of data over certain period of time is granted by CAPACITY GRANT messages sent from Node B.

Parameters of the protocols are configured by signaling in the Control Plane. This signaling is governed by radio Resource Control (RRC) protocol for the signaling between radio network (S-RNC and UE) and by application protocols, NBAP on the lub interface and RNSAP on the lur interface.

### Mobility Management Functions

### Radio Mobility

Before defining radio mobility, service states of RRC connected mode will be briefly described.

In the Cell_DCH state of the RRC connected mode, dedicated transport channel (DCH) is located to a UE and the UE is known by its serving RNC on a cell level. RRC connection mobility is managed by Active Set Update function.

In the Cell_FACH state of the RRC connected mode, FACH and RACH transport channels can be used for downlink and uplink transmission and cell reselection is used for managing RRC connection mobility. Location of the UE on cell level is reported to the network by Cell Update function.

In the Cell_PCH state of the RRC connected mode, the UE may be reached only via the paging channel (PCH). When wishing to perform a cell reselection while being in Cell_PCH state, the UE may autonomously transit to Cell_FACH state and return to Cell_PCH state after completing the procedure if no other activity has been detected.

In the following, UE identifiers used in the messages of the signaling diagrams of the invention report will be briefly described.
- S-RNTI is an identifier allocated by S-RNC and unique within S-RNC,
- C-RNTI is an identifier allocated by C-RNC and unique within C-RNC,
- U-RNTI is an identifier obtained as a combination of S-RNTI and S-RNC ID and
- D-RNTI is an identifier allocated by D-RNC and unique within D-RNC.

Radio mobility comprises RRC connection mobility functions as defined in the previous paragraphs.

More general, radio mobility comprises a set of mobility management methods, based on knowledge of the UE location on the cell level, that are aimed at achieving nearly optimal utilization of available radio resources and Quality of Service (QoS) as seen by an end user.

### Active Set Update

An Active Set Update function (see 3GPP TSG RAN TS 25.331 "RRC Protocol Specification", V.6.0.1, available at http://www.3gpp.org) modifies the active set of the communication between a UE in Cell_DCH state of the RRC connected mode and UTRAN. The procedure comprises three functions: radio link addition, radio link deletion and combined radio link addition and deletion. The maximum number of simultaneous radio links may be for example set to eight.

Decision on triggering this function is made by RRC in the S-RNC based on certain measurements as described in the sequel. New radio links may be added to the Active Set once the pilot signal strengths of respective base stations (Node Bs) exceed a certain threshold relative to the pilot signal of the strongest member within Active Set.

A radio link may be removed from the active set once the pilot signal strength of the respective base station exceeds certain threshold relative to the strongest member of the Active Set.

The threshold for radio link addition may be chosen to be higher than that for the radio link deletion. Hence, addition and removal events form a hysteresis with respect to pilot signal strengths.

Pilot signal measurements may be reported to the network (S-RNC) from UE by means of RRC signaling. For this and other relevant RRC connection mobility functions CPICH measurements in terms of RSCP or E_{c}/Nₒ may be used (see 3GPP TSG RAN TS 25.215 "Physical Layer Measurements - (FDD)", V.6.0.0, available from http://www.3gpp.org).

Before sending measurement results, some filtering may be performed to average out the fast fading. Typical filtering duration is for example about 200 ms and contributes to the handover delay. Based on filtered measurement results which should hold certain relation to the thresholds for a certain period of time (ΔT), the S-RNC may decide to trigger the execution of one of the procedures of Active Set Update function.

Corresponding signaling across lub/lur interfaces is performed by NBAP/RNSAP procedures mentioned in the previous paragraphs. While executing this function, ACTIVE SET UPDATE and ACTIVE SET UPDATE COMPLETE messages of the RRC protocol may be exchanged between S-RNC and UE. Corresponding NBAP/RNSAP messages may be also exchanged across lub/lur interfaces. An Active Set Update may be applicable for DCH transport channels.

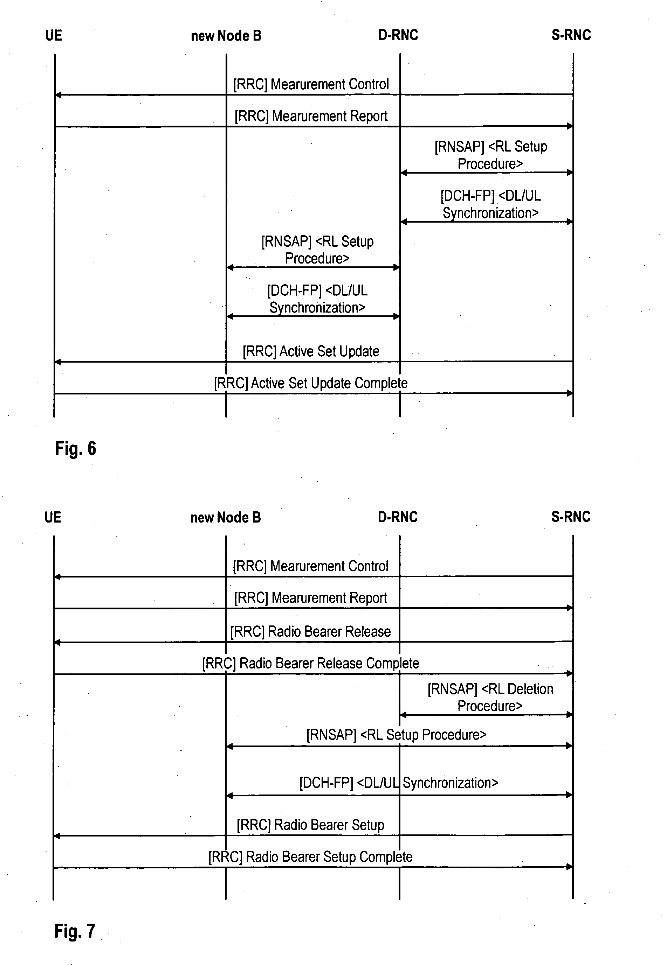

A signaling diagram of an exemplary Active Set Update function comprising Radio a Link Additon procedure is shown in the Fig. 6. In the example shown in Fig. 6, it is further assumed that a newly added Node B is located in a D-RNS controlled by the D-RNC. Node Bs already in the Active Set of observed UE are not shown in the figure.

The signaling may be divided into three temporal phases that are considered separately in the sequel: (1) measurement control, (2) Radio Link addition and (3) Active Set Update. Each phase may comprise a number of messages that, in turn, encompass several Information Elements (IEs). Relevant IEs will be described in the following.

During the measurement control phase, S-RNC may at any time send a [RRC] MEASUREMENT CONTROL message. The message may contain information elements (IEs) specifying measurement ID, reporting mode (event driven, immediate or periodic), the quantities to report (CPICH E_{c}/Nₒ, CPICH RSCP etc.) and cells that should be monitored. The message may for example be broadcast over BCH transport channel as a part of System Information Block (SIB) 12.

Based on the contents of the measurement control message, the UE may perform appropriate measurements and send report in a [RRC] MEASUREMENT REPORT message. The report is sent when at least one measurement criterion is met. Criteria could be exceeding the value of certain threshold for the event driven reporting mode or expiry of a preconfigured timer for the periodic reporting mode. If the IE for reporting mode is set for immediate reporting, the UE will send the report as soon as possible. The reporting message includes IEs for measurement ID (linking the report to the control message), measured results and, if necessary, event results for the event driven reporting mode.

During the Radio Link Addition phase, the S-RNC activates a new radio link in the new Node B. According to the example, the new Node B is located in the D-RNS controlled by the D-RNC. Hence radio links between S-RNC and D-RNC (across lur interface) and between D-RNC and targeted Node B (across lub interface) have to be set. This is done by [RNSAP] <RL Setup Procedure> comprising [RNSAP] RL SETUP REQUEST and [RNSAP] RL SETUP RESPONSE messages for the lur interface and by an analogous [NBAP] <RL Setup procedure>. After establishing user plane on the interfaces, user plane is synchronized by lub/lur [DCH FP] DL/UL Synchronization procedure (see 3GPP TSG RAN TS 25.402 "Synchronisation in UTRAN Stage 2", V.6.0.0, available at http://www.3gpp.org).

In the Active Set Update phase, UE is informed about the new Node B by [RRC] ACTIVE SET UPDATE message. The message may contain IEs specifying Cell ID of the added cell, scrambling code, channelization code and uplink power to be used and activation time. If activation time is not specified, the UE may start Layer 1 synchronization immediately. After receiving this message, the UE may start Layer 1 synchronization on the Uu interface. Finally, the UE sends [RRC] ACTIVE SET UPDATE COMPLETE message to the S-RNC.

### Hard Handover

A Hard Handover function changes the serving cell of a UE in Cell_DCH state of the RRC connected mode by first deleting the old radio link and then adding a new radio link. Decision on triggering hard handover function is made by RRC in S-RNC based on certain measurements similar as in the previous case. There are several ways to implement this function by Uu interface signaling. For example, RADIO BEARER RELEASE and RADIO BEARER SETUP procedures of the RRC protocol can be exchanged between S-RNC and Node B. Corresponding NBAP/RNSAP messages may be also exchanged across lub/lur interfaces. A typical example of intrafrequency hard handover is Inter Node B serving cell change for HS-DSCH transport channel (see 3GPP TSG RAN TR 25.308 "High Speed Downlink Packet Access (HSDPA): Overall Description Stage 2", V.6.0.0, available at http://www.3gpp.org).

An exemplary signaling diagram for a typical Hard Handover procedure is shown in the Fig. 7. During the Hard Handover, the connection to the old Node B is firstly broken and then a connection to the new Node B is established. It is assumed that both old and new Node B are located in a same RNS controlled by the S-RNC. The signaling will be again divided into three temporal phases: (1) measurement control, (2) Radio Bearer / Radio Link deletion and Radio Link addition and (3) Radio Bearer Setup.

The measurement control phase is analogous to the phase (1) from Fig. 6.

During the second phase, Radio Bearer / Radio Link deletion and Radio Link addition, the Radio Bearer between the S-RNC and the UE corresponding to the connection via the old Node B is deleted first. This may be accomplished by exchanging [RRC] RADIO BEARER RELEASE and [RRC] RADIO BEARER RELEASE COMPLETE messages between the S-RNC and the UE. The corresponding Radio Link is removed by invoking [NBAP] <RL Deletion procedure> between the S-RNC and the old Node B. Finally, a new Radio Link is added between the S-RNC and the new Node B by invoking [NBAP] <RL Setup procedure>. The establishment of the user plane on the lub interface is followed by user plane synchronization during lub [DCH FP] DL/UL Synchronization procedure.

Finally, in the third phase, a new Radio Bearer is Setup between the S-RNC and the UE by exchanging [RRC] RADIO BEARER SETUP and [RRC] RADIO BEARER SETUP COMPLEE messages.

### Cell Update

A Cell Update function may be used to report the location of the UE in Cell_FACH/Cell_PCH state of the RRC connected mode to the network. It is usually invoked by cell reselection procedure (see 3GPP TSG RAN TS 25.304 "User Equipment (UE) Procedures in idle mode and cell reselection in connected mode", V.6.0.0, available at http://www.3gpp.org) that can be carried out in Cell_FACH state of the RRC connected mode only. Decision on triggering cell reselection may be also based on filtered measurements of CPICH RSCP or CPICH Ec/No. Cell reselection is triggered upon expiry of configurable timer Tₙ. The timer may be stopped once chosen filtered quality index for observed set of neighboring cells becomes larger than filtered quality index for the serving cell increased by a configurable offset. Cell Update can be realized by exchanging CELL UPDATE and CELL UPDATE CONFIRM RRC messages across Uu interface.

As can be noticed from the explanations above, Active Set Update, Hard Handover and Cell Update functions have in common that they are triggered by the S-RNC based on a predefined and preconfigurable set of operations on the results of UE measurement reporting.

Hence, these procedures will be referred to as mobile₋evaluated. Secondly, as can be readily deduced from the above explanations, all of the functions for the radio mobility are performed based on a precise knowledge of UE location on the cell level. Finally, the above procedures do not have any immediate impact whatsoever on the Core Network (CN) meaning that they do not influence the connection of S-RNC to the CN over lu interface. Radio mobility functions are therefore CN-decoupled functions or functions without involvement of CN.

### Micro mobility

Micro mobility comprises SRNS relocation procedure as will be described in the following paragraphs.

More general, micro mobility comprises a set of mobility management methods, based on knowledge of UE location on the RNS level, that are aimed at nearly optimal utilization of installed network infrastructure and available radio resources.

SRNS relocation may be defined as a method of moving the S-RNC functionality from one RNC to another RNC in the network.

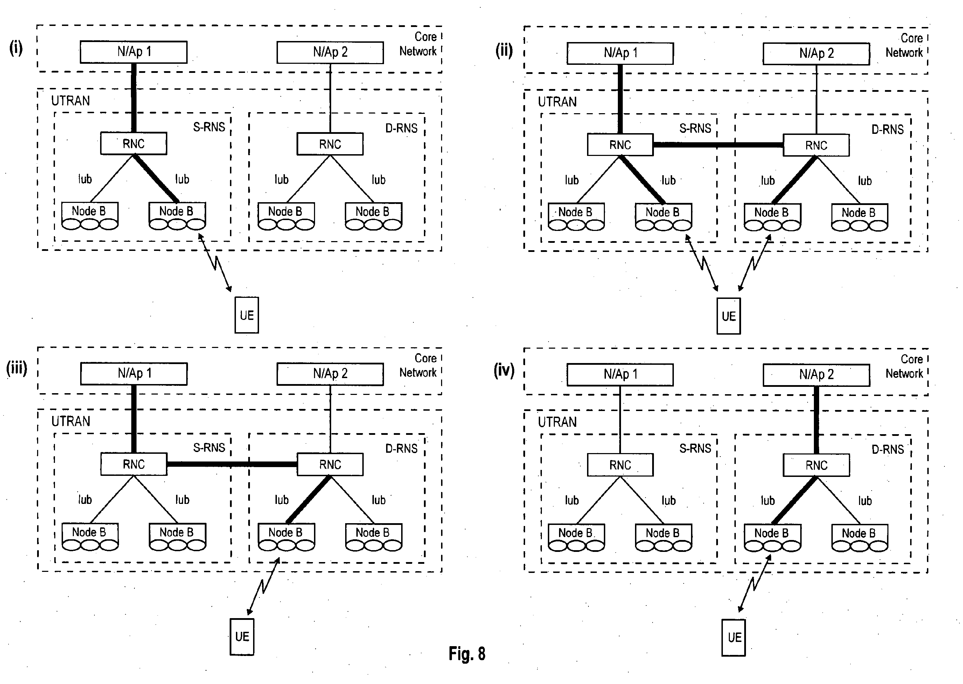

In the following, the exemplary scenario shown in the Fig. 8 is explained. Firstly, the UE maintains a connection over a single Node B within the S-RNS in stage (i). After Active Set Update is performed, the Node B from D-RNS is added to the Active Set of the UE (ii). After another Active Set Update, the only remaining Node B in the Active Set is the Node B in the D-RNS (iii). It can be noticed that in the stage (iii) the UE is deprived of any connections to Node Bs in the S-RNS thus providing a cause for relocation. Finally, the state of the connections after S-RNS relocation is shown in the stage (iv) of the figure.

It should be noted that the S-RNC is the 'anchor point' of the lu connection on the UTRAN side. lu interface is terminated in the SGSN (Serving GPRS Supporting Node) on the CN side. Therefore, SRNS relocation always involves at least one CN node and can be classified into intra-SGSN and inter-SGSN SRNS relocation.

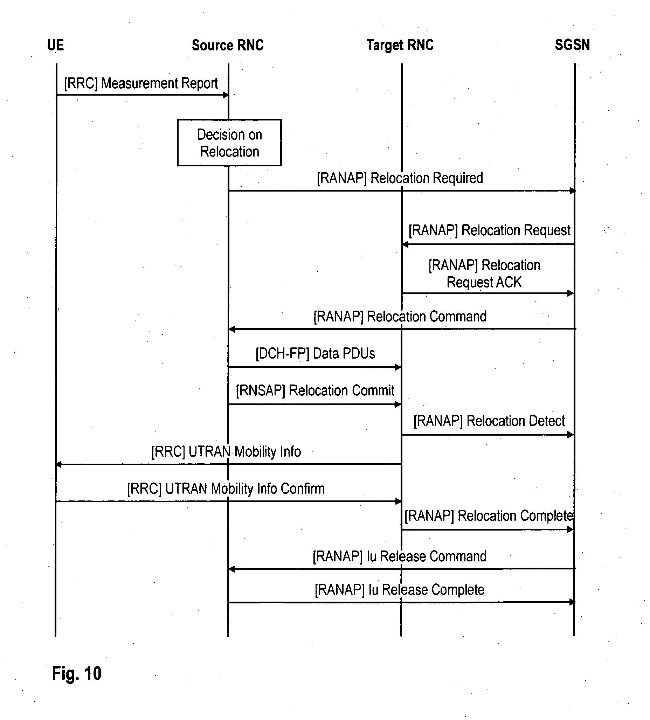

An exemplary signaling diagram of a inter SGSN SRNS relocation procedure (for a Rel99/4 UMTS architecture) is shown in the Fig. 10. The signaling can be divided into five phases: (1) Relocation preparation and resource allocation, (2) Relocation Commit and Relocation Detect, (3) UTRAN Mobility Information, (4) Relocation Complete and (5) lu Release. The old S-RNC is referred to as the Source RNC while the new S-RNC is referred to as the Target S-RNC. Each phase comprises a number of messages that, in turn, encompass several Information Elements (IEs). Relevant IEs are detailed in the explanation.

During the first phase, Relocation preparation and resource allocation, the Source RNC decides to trigger the relocation procedure. Please note that even though the [RRC] MEASUREMENT REPORT message is shown on the figure, the Source RNC decides on relocation based primarily on other criteria, as, for example, the state of the Active Set after previously completed Active Set Update. To trigger the SRNS relocation, the Source RNC sends the [RANAP] RELOCATION REQUIRED message to the SGSN. The message typically contains the Target RNC ID and Relocation Cause ('Resource optimization') IEs, and a set of IEs referred to as Source-to-Target RNC Container. The container contains the set of data being transparent to the CN that are important for operation of the RRC protocol in the Target RNC like UE capabilities, DRNTI (Drift Radio Network Temporal Identity) RAB info and RRC info.

The SGSN then establishes a RAB towards the Target RNC based on already existing PDP Context / QoS attributes, by sending [RANAP] RELOCATION REQUEST message. The message contains Relocation Cause IE, RAB parameters IE and already mentioned Source-to-Target RNC Container. The Target RNC responds by the [RANAP] RELOCATION REQUEST ACK message containing IEs with assigned RAB parameters and a Target-to-Source RNC Container with DRNTI. A new RAB is now successfully established towards the Target RNC.

The SGSN then sends the [RANAP] RELOCATION COMMAND message to the Source RNC. The message contains the list of assigned RAB parameters and the Target-to-Source RNC Container carrying DRNTI. When receiving this message, the Source RNC knows the Target RNC is ready to start receiving data. This means that Source RNC may start forwarding Data PDUs to the Target RNC ([DCH-FP] Data PDUs message).

It should be noted that this action of the Source-RNC is optional and standardized as an improvement of SRNS relocation for real-time services from PS domain for the Rel4 of 3GPP standardization ("seamless" relocation) - see 3GPP TSG RAN TS 25.936 "Handovers for real-time services for PS domain", V. 4.0.1, available at http://www.3gpp.org. The forwarding may be applied if it is indicated in the [RANAP] RELOCATION REQUIRED that the seamless relocation is required (e.g. in the IE standing for Relocation Cause).

In the second phase, Relocation Commit and Relocation Detect, the [RNSAP] RELOCATION COMMIT message is firstly sent from the Source RNC to the Target RNC containing DRNTI, RAB ID and PDCP sequence numbers (sequence numbers are contained only if lossless relocation is required). As a response, the Target RNC sends the [RANAP] RELOCATION DETECT message to the SGSN in order to report that the contact with the Source RNC has now been established over the lur interface.

During the third phase, UTRAN Mobility Information, the UE is firstly updated about the change of the SRNC by the [RRC] UTRAN MOBILITY INFO message that is sent from the SRNC. The message contains IEs with RAB ID, new U-RNTI and, optionally, PDCP sequence numbers on UL (if lossless relocation is required). The UE responds to the SRNC by the [RRC] UTRAN MOBILITY INFO CONFIRM message containing IEs with RAB ID and, optionally, DL PDCP sequence number if lossless relocation is required.

In the fourth phase, Relocation Complete, only the [RANAP] Relocation Complete message is sent from the SRNC (previously Target SRNC) to the SGSN.

Finally, the fifth phase, lu Release, is aimed at releasing the old lu connection established between the SGSN and the old SRNC. The connection is released by exchanging [RANAP] lu RELEASE COMMAND and [RANAP] lu RELEASE COMPLETE messages between the SGSN and the Source RNC. The former message contains the IE Release Cause set to 'Successful Relocation'.

Please note that during the SRNS relocation no new radio links are established since the UE has already been assigned radio resources in the new RNC during e.g. soft handover.

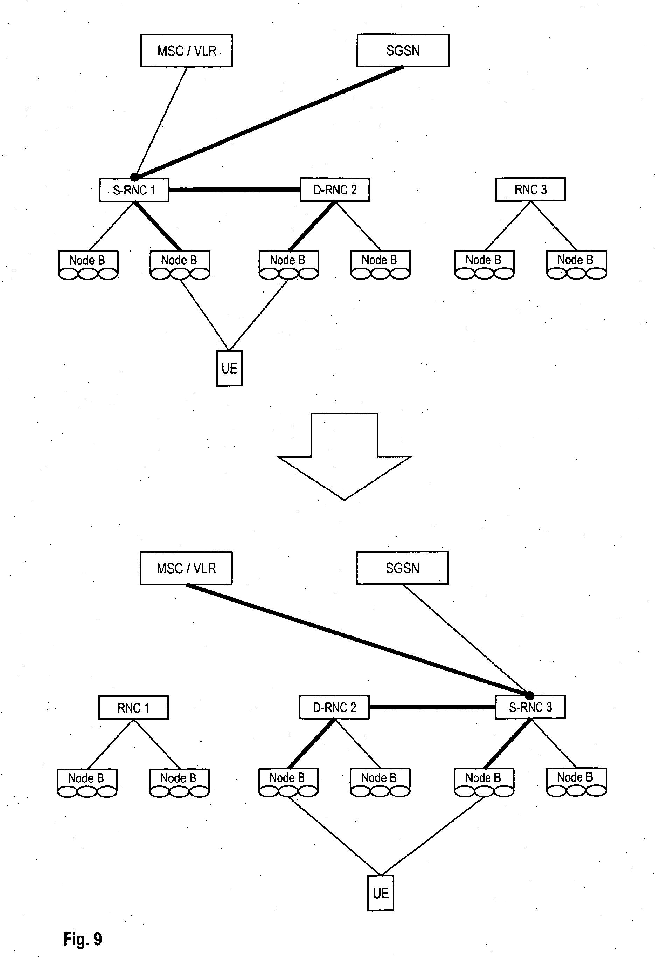

A possible enhanced SRNS relocation scenario is plotted in the Fig. 9. For the Rel99/4 the current SRNS relocation procedure can only support the case where all radio links are in a single DRNS and when the D-RNC is the target RNC. In order to fully benefit from macro diversity gain from the soft handover while simultaneously enabling SRNS relocation, it was proposed for the Rel5 of 3GPP standardization (see 3GPP TSG RAN TR R3.010 "SRNS relocation enhancement", V.0.4.0, available at http://www.3gpp.org) to support SRNS relocation even when not all of the radio links are established in the same DRNS.

This enhancement of the relocation procedure was not introduced in the standard. On the Fig. 9 it can be seen that the UE (or mobile station - MS) maintains radio links to the S-RNC 1 and the D-RNC 2. Based on the measurements it is then decided in the S-RNC 1 to perform combined relocation and Active Set Update. Relocation will be performed by moving S-RNC function from S-RNC 1 to the RNC 3 (S-RNC 3 on the right hand side of the figure), while Active Set Update will be performed by deleting radio link towards S-RNC 1 and establishing new radio link towards S-RNC 3. Without above-mentioned enhancement of the relocation procedure, this would not be possible.

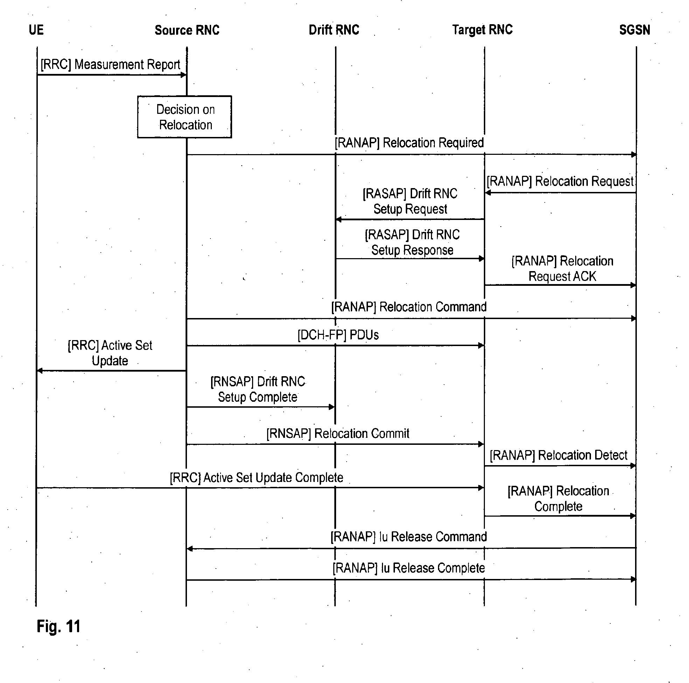

Fig. 11 shows an exemplary signaling diagram for the enhanced SRNS relocation. It can be noticed that some modifications are carried out in the relocation preparation and resource allocation phase relative to the signaling diagram from the Fig. 10.

Additional messages [RNSAP] DRIFT RNC SETUP REQUEST and [RNSAP] DRIFT RNC SETUP RESPONSE are exchanged between Drift RNC 2 and Target RNC 3. The purpose of the former message is to indicate to the D-RNC 2 that the serving RNC for its radio connections will change to the target RNC 3. After receiving the latter message, the target RNC 3 makes the lur user plane reservation towards the D-RNC 2.

Some modifications relative to the signaling diagram from the previous figure are also carried out in the Relocation Commit and Relocation Detect phase. Firstly, the [RNSAP] DRIFT RNC SETUP COMPLETE message is introduced between the Source RNC1 and the Drift RNC2 to inform the latter element that to release the old lur link and start using newly configured lur link. Finally, though not readily visible from the diagram, it should be noted that the [RRC] ACTIVE SET UPDATE and the [RRC] ACTIVE SET UPDATE COMPLETE messages are complemented with additional IEs to compensate for the absence of [RRC] UTRAN MOBILITY INFO / [RRC] UTRAN MOBILITY INFO CONFIRM pair of messages. For example, the [RRC] ACTIVE SET UPDATE message may contain some CN-specific IEs. This enhanced SRNS relocation will not be considered further.

When comparing Fig. 11 to Fig. 6 it can be noticed that delay of the Active Set Update function is considerably increased in case when it is combined with the relocation procedure due to merging the function with messages that are relocation-specific and require signaling even to the CN. Thus, RRC measurements that were used as a basis for triggering the Active Set Update may be heavily outdated. This would, in turn, result in suboptimal radio performance despite of the enhancements of the relocation procedure.

It can be firstly noticed that the SRNS relocation in the legacy architecture may be triggered rather based on knowledge of a set of radio links being configured for a particular UE than based on the measurement reporting. Hence, SRNS relocation may be referred to as a network-evaluated procedure. Secondly, as can be readily deduced from the above explanations, relocation procedure is performed based on a precise knowledge of UE location on the RNS level. Finally, relocation procedure definitely has an immediate impact on the Core Network (CN) meaning that it directly influences lu connection between S-RNC and CN. As a micro mobility procedure, relocation in the networks with legacy architecture is therefore CN-coupled procedure or procedure with involvement of CN.

Identified differences between radio mobility and micro mobility for legacy UTRAN architecture are summarized in the table below. In addition, relative signaling load on network interfaces is considered.

| | **Initiation of functions / procedures** | **Knowledge of UE location** | **Involvement of CN** | **Signaling load on network interfaces (lub/lur/lu)** |
|---|---|---|---|---|
| **Radio mobility** | Mobile-evaluated | Cell level | No | Medium |
| **Micro mobility** | Network-evaluated | RNS level | Yes | Large |

With respect to relocation procedures in distributed network also the application US 2003/0036387 A1 provides an enhanced approach. The application relates to a relocation method, system and network element for changing a serving radio resource control entity in a radio access network with distributed architecture (IPRAN).

The method proposed by US 2003/0036387 A1 allows a user plane connection to be maintained with drift network elements can enhance radio performance. This method merely extends the cause for relocation with respect to the standardized relocation procedure as described with reference to Fig. 9 above. However, the potentially intolerable delay of RRC signaling due to frequent serving network element relocations in observed network architecture may not be suitably tackled using the proposed method.

### Evolved UMTS UTRAN Architecture

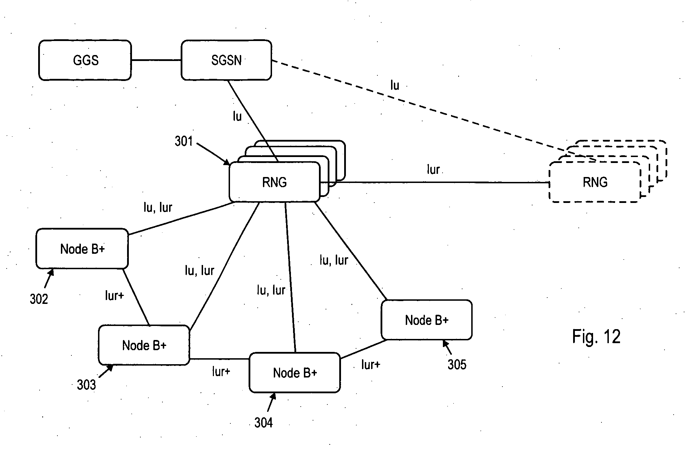

In the following a proposal for an Evolved UMTS UTRAN architecture will be described. In this architecture each of the new network elements may be defined in terms of its control and user plane functions. An overview of the network architecture is given in the Fig. 12.

The RNG (Radio Network Gateway) is used for interworking with the conventional RAN, and to act as a mobility anchor point meaning that once an RNG has been selected for the connection, it is retained for the duration of the call. This includes functions both in control plane and user plane. Further, the RNG provides connectivity to the core network of the mobile communication system.

### Control plane functions

Part of RNG functions is to act as a signaling gateway between the evolved RAN and the CN, and the evolved RAN and Re199/4/5 UTRAN. It has the following main functions:
- lu signaling gateway, i.e. anchor point for the RANAP connection,
   o RANAP (Radio Access Network Application Part) connection termination, including:
      ■ Setup and release of the signaling connections
      ■ Discrimination of connectionless messages
      ■ Processing of RANAP connectionless messages,
   o Relay of idle and connected mode paging message to the relevant NodeB+(s),
- The RNG takes the CN role in inter NodeB+ relocations,
- User plane control and
- lur signaling gateway between NodeB+ and Rel99/4/5 RNC

### User plane functions

The RNG is the user plane access point from the CN or conventional RAN to the evolved RAN. It has the following user plane functions:
- User plane traffic switching during relocation,
- Relaying GTP (GPRS tunneling protocol on the lu interface) packets between NodeB+ and SGSN (Serving GPRS Support Node, an element of the CN) and
- lur interworking for user plane

The NodeB+ element terminates all the RAN radio protocols (L1, L2 and L3). NodeB+ functions are studied separately for control plane and user plane.

### Control plane functions

This category includes all the functions related to the control of the connected mode terminals within the evolved RAN. Main functions are:
- Control of the UE,
- RANAP connection termination,
   o Processing of RANAP connection oriented protocol messages
- Control / termination of the RRC connection and
- Control of the initialization of the relevant user plane connections

The UE context is removed from the (serving) NodeB+ when the RRC connection is terminated, or when the functionality is relocated to another NodeB+ (serving NodeB+ relocation). Control plane functions include also all the functions for the control and configuration of the resources of the cells of the NodeB+, and the allocation of the dedicated resources upon request from the control plane part of the serving NodeB+.

### User plane functions

User plane functions include the following:
- Protocol functions of PDCP (Packet Data Convergence Protocol), RLC and MAC and
- Macro Diversity Combining

### Mobility Management

### Radio Mobility

Radio mobility procedures are largely unchanged because they are governed by RRC protocol. Functionality of this protocol in the evolved architecture would remain the same. The only difference is that its termination on the network side would be Serving Node B+.

### SRNS Relocation

Before defining relocation in radio access networks with distributed architecture, let us shortly consider some aspects of relocation. Relocation in legacy radio access network was defined as a procedure by means of which the SRNC functionality is moved from one RNC to another. In a radio access network with distributed architecture, Serving Node B+ may be defined as the Node B+ currently performing all RRC functions for the observed UE. Hence, SRNC relocation in the legacy architecture would correspond to the Serving Node B+ relocation in the radio access network with distributed architecture. In the sequel it will be referred to as serving network element relocation procedure as well. It should be noted that the latter could be used as a more generic term for the legacy SRNS relocation.

Therefore, micro mobility in a radio access network with distributed architecture can be defined as a serving network element (serving Node B+) relocation. Detailed design of relocation in this case is an objective of this report.

An immediate consequence of the observed difference between legacy and distributed architecture with respect to micro mobility is the frequency of relocations. Generally, frequency of serving network element relocation may dominantly depend on two factors: (1) the number of interfaces of the observed element and traffic load on observed interfaces, air interface excluding and (2) the size of coverage area controlled by observed network element.

When examining the exemplary distributed network architecture, it can be readily concluded that the frequency of serving network element relocations increases relative to the frequency of relocations in legacy architecture. Firstly, the number of wired interfaces of Node B+ is tripled (2 lur interfaces and one lu/lur interface) compared to the number of wired interfaces of Node B in the legacy architecture (one lub interface). The number of interfaces compared to RNC in the legacy architecture is approximately equal. However, in distributed architecture the traffic load on lur interfaces may be substantially higher. Secondly, the coverage area controlled by Node B+ may be much smaller than the one controlled by legacy RNC.

Frequent serving network element relocations in distributed radio access networks may be advantageously used to decrease RRC signaling delay towards observed UE. This is obvious from typical Signaling Radio Bearer (SRB) configurations (typically 1.7, 3.4, 13.6 kbps with interleaving lengths up to 80ms) and typical lub/lur delays and network element processing delays (of the order of 10 ms) - see also 3GPP TSG RAN TR 25.853 "Delay Budget within the Access Stratum", V.4.0.0, and 3GPP TSG RAN TS 34.108 "Common test environments for User Equipment (UE) conformance testing", V.4.9.0, both available at http://www.3gpp.org.

As discussed for legacy SRNS relocation enhancement, the integration of radio and micro mobility (e.g. the integration of Active Set Update with SRNS relocation) may be desirable to achieve better radio efficiency. However, at the same time it was observed that, assuming legacy architecture, the integration would lead to almost unacceptable delay in establishing target configuration of the Active Set. When considering mobility management in distributed architecture, it can be easily deduced that the integration of micro mobility and radio mobility appears at least to be a more natural approach. Procedures supporting integrated serving network element relocation and radio mobility will be further referred to as enhanced relocation procedures.

### SUMMARY OF THE INVENTION

Timely execution of radio mobility-related procedures is a central problem when improving serving network element relocation. Hence, the problem with serving network element relocation in distributed radio access network architecture may be to optimize the relocation procedure such that the delay caused by executing radio mobility-related procedures is minimized. A further constraint of this optimization may be to minimize the signaling load in the network during the relocations that are shown to be much more frequent relative to the legacy architecture.

One of the various objects of the present invention is to tackle potentially intolerable delay of control signaling due to frequent serving network element relocations in the network architecture.

The object is solved by the subject matters of the independent claims. Preferred embodiments of the present invention are subject matters to the dependent claims.

One embodiment of the present invention relates to a method for relocating control plane functionality of a serving base station in a mobile communication system comprising a mobile terminal and a plurality of base stations. The method may comprising the steps of establishing a first operation state, in which the mobile terminal is in soft handover involving a first base station and a second base station or in which the mobile terminal performs a hard handover or cell update from the first base station to the second base station, establishing a second operation state, in which the mobile terminal is in soft handover involving the second base station and a third base station or in which the mobile terminal is connected to the second base station, and transferring the control plane functionality from the first base station to the second base station, when the second operation state has been established.

According to a further embodiment of the embodiment, when performing a soft handover in the first operation state or second operation state, in the first operation state a link between the first base station and the second base station may be established. Similarly in the second operation state a link between the second base station and the third base station may be established.

In another variation the method may further comprise the step of maintaining the link between the first base station and the second base station in the second operating state.

in a further variation, the first base station may use a link to a gateway to the core network of the mobile communication system in the first operating state for data exchange between the gateway and the mobile terminal and may maintain the link to the gateway in the second operation state.

Further, the method may comprise the step of exchanging data between the mobile terminal and the gateway via the first base station in the first operation state and in the second operation state. Thus, the data exchanged between the mobile terminal and the gateway may not be directly forwarded from the second base station to the gateway, but are passed the first base station as an intermediate hop. Hence, in this exemplary variation only the control plane functionality is relocated, while the connection to the gateway from the first operation state may be maintained.

In order to facilitate the data transfer between mobile terminal and the gateway the links between the first base station and the second base station and the second base station and the third base station respectively may be used to exchange data between the gateway and the mobile terminal via the first base station.

In a further variation of the method, same may further comprise the step of transmitting relocation-specific information from the first base station to the second base station.

For example, the relocation-specific information may be transmitted from the first base station to the second base station in a Relocation Request message of an application protocol.

Moreover, the method according to another variation may comprise the steps of receiving at the first base station a Relocation Request Acknowledgement message of an application protocol from the second base station, updating the active set of the mobile terminal using an Active Set Update message of the RRC protocol transmitted from the first base station to the mobile terminal, receiving from the mobile terminal an Active Set Update Complete message of the RRC protocol at the second base station, wherein the received message informs the second base station that the active set update has been completed, and transmitting an Active Set Update Complete Forward message of an application protocol from the second base station to the first base station informing the first base that the mobile terminal has completed the active set update.

Additionally a further variation encompasses the step of transmitting a Relocation Commit message of an application protocol from the first base station to the second base station to trigger a change from the first operation state to the second operation state.

The Active Set Update message may comprise information elements providing an Location Area Identification and/or an Routing Area Identification.

A further embodiment of the present invention relates to using the method above when performing a hard handover or cell update in the first operation state. In this case, a link between the first base station and the second base station in the first operation state may be established.

The method according to this embodiment may further comprise the step of maintaining the link between the first base station and the second base station in the second operating state.

Another variation encompasses the use of a link between the first base station and a gateway to the core network of the mobile communication system established in the first operating state for data exchange between the gateway and the mobile terminal and maintaining the link to the gateway in the second operation state.

In a further variation of the embodiment, a Radio Link Setup procedure of an application protocol and Downlink/Uplink Synchronization procedure a frame protocol may be used to establish the link between the second base station and the third base station.

Moreover, the first base station may decide to perform the relocation of the control plane functionality according to another variation.

In a further variation the method may further comprise establishing a third operation state, in which the mobile terminal is in soft handover or in hard handover or cell update from the second base station to the third base station, and wherein data between the mobile terminal and a gateway to the core network of the mobile communication system is exchanged via the second base station. Moreover in the second operation state data between the mobile terminal and the gateway may be exchanged via the first base station.

The first base station may further decide whether to establish the second operation state, or whether to establish a third operation state, and may establish the second operation state or the third operation state based on the decision. Further, the control plane functionality may be transferred to the second base station, when either the second or the third operation state has been established.

A further embodiment of the present invention encompasses to change from the second operation state to the third operation state, if the second base station receives a relocation command from a gateway to the core network of the mobile communication system.

The decision to establish the second operation state or the third operation state may for example be based on either one of or a combination of indices of the signaling load or bandwidth utilization on the link between the first base station and the second base station and the signaling load or bandwidth utilization on the connection between the first base station and the gateway.

Another embodiment of the present invention provides a base station in a mobile communication system, comprising means adapted to perform the method according to the different embodiments and variations thereof.

A further embodiment of the present invention provides a mobile communication system comprising a mobile terminal and a plurality of base stations. The system may comprise a first base station providing control plane functionality to the mobile terminal in a first operation state, the first base station being involved in a soft handover of the mobile terminal or performing a hard handover or cell update of the mobile terminal to a second base station, and the second base station involved in the soft handover of the mobile terminal in the first operation state, the second base station in a second operation state being connected to the mobile terminal or being involved in a second soft handover of the mobile terminal. The first base station may be adapted to transfer the control plane functionality to the second base station, when the second operation state is established.

According to a variation of this embodiment, the system further comprises a third base station involved in the second soft handover of the mobile terminal in the second operation state.

When performing a soft handover in the first operation state or second operation state, in the first operation state the first base station and the second base station may be adapted to establish a link between the first base station and the second base station, and in the second operation state the second base station and the third base station may be adapted to establish a link between the first base station and the second base station.

When performing a hard handover or cell update in the first operation state, in the first operation state the first base station and the second base station may be adapted to establish a link between the first base station and the second base station.

A further variation provides a system, wherein the first base station and the second base station may be adapted to maintain the link in the second operating state.

Moreover, the first base station and the second base station may be adapted to use a link between the first base station and a gateway to the core network of the mobile communication system in the first operating state for data exchange between the gateway and the mobile terminal, and the first base station may be adapted to maintain the link to the gateway in the second operation state.

In another variation the third base station may be adapted facilitate the exchange of data between the mobile terminal and the gateway via the first base station in the second operation state.

The base stations may further be adapted to use the links between the first base station and the second base station and the second base station and the third base station respectively for exchanging data between the gateway and the mobile terminal via the first base station.

### BRIEF DESCRIPTION OF THE FIGURES

In the following the present invention is described in more detail in reference to the attached figures and drawings. Similar or corresponding details in the figures are marked with the same reference numerals.
- **Fig. 1**: shows the high-level architecture of UMTS,
- **Fig. 2**: shows the architecture of the UTRAN according to UMTS R99/4/5,
- **Fig. 3**: shows an architectural overview of a Serving and Drift Network Subsystem,
- **Fig. 4**: shows an User Plane protocol stack architecture for HSDPA in a Rel99/4/5 UTRAN architecture,
- **Fig. 5**: shows an User Plane protocol stack architecture for HSDPA in the Evolved UTRAN architecture,
- **Fig. 6**: shows a signaling diagram for a Radio Link Addition procedure in a Rel99/4/5 UTRAN architecture,
- **Fig. 7**: shows a signaling diagram for a hard Handover procedure in a Rel99/4/5 UTRAN architecture,
- **Fig. 8**: shows an exemplary serving radio network subsystem (SRNS) relocation in a Rel99/4/5 UTRAN architecture,
- **Fig. 9**: shows an exemplary serving radio network subsystem (SRNS) relocation in the Evolved UTRAN architecture,
- **Fig. 10**: shows an exemplary signaling diagram of a serving radio network subsystem (SRNS) relocation of Fig. 8 in a Rel99/4/5 UTRAN architecture,
- **Fig. 11**: shows an exemplary Evolved UTRAN architecture,
- **Fig. 12**: shows an exemplary signaling diagram of a serving radio network subsystem (SRNS) relocation of Fig. 9 in the Evolved UTRAN architecture,
- **Fig. 13**: shows a scenario of a partial serving network element relocation using soft handover and an active set update according to one embodiment of the present invention,
- **Fig. 14**: shows a scenario of a total serving network element relocation using soft handover and an active set update according to one embodiment of the present invention,
- **Fig. 15**: shows a scenario of a partial serving network element relocation using hard handover/a cell update procedure according to one embodiment of the present invention,
- **Fig. 16**: shows a scenario of a total serving network element relocation using hard handover/a cell update procedure according to one embodiment of the present invention,
- **Fig. 17**: shows a signaling diagram for a partial serving network element relocation using soft handover and an active set update according to an exemplary embodiment of the present invention,
- **Fig. 18**: shows a signaling diagram for a total serving network element relocation using soft handover and an active set update according to an exemplary embodiment of the present invention,
- **Fig. 19**: shows a signaling diagram for a partial serving network element relocation using hard handover according to an exemplary embodiment of the present invention, and
- **Fig. 20**: shows a signaling diagram for a total serving network element relocation using hard handover according to an exemplary embodiment of the present invention.

### DETAILED DESCRIPTION OF THE INVENTION

The following paragraphs will describe various embodiments of the present invention. For exemplary purposes only, most of the embodiments are outlined in relation to a UMTS communication system and the terminology used in the subsequent sections mainly relates to the UMTS terminology. However, the used terminology and the description of the embodiments with respect to an UMTS architecture is not intended to limit the principles and ideas of the present inventions to such systems.

The additional "+" sign appended to the protocols or network elements are intended to denote that these protocols and network elements may have an enhanced functionality or may be adapted to the Evolved UTRAN architecture. The additional "+" sign should however not be understood as a limitation of the principles and ideas of this invention.

Also the detailed explanations given in the Technical Background section above are merely intended to better understand the mostly UMTS specific exemplary embodiments described in the following and should not be understood as limiting the present invention to the described specific implementations of processes and functions in the mobile communication network.

Generally, the principles of the present invention may be applicable to any kind of mobile communication systems employing a distributed architecture, for example to communication systems based on the IMT-2000 framework.

Further, the term "link" is used frequently in this document. It should be noted that the term rather refers to an established link for data exchange, for examples between Node Bs, than to a cable or any physical connection connecting network elements. For example, a link may be understood as a link between Node Bs based on the lur+ interface specifications.

One of the various aspects of the present invention relates an enhanced total and partial inter RNG Serving Node B+ (SNode B+) relocation aiming to minimize the delay of radio-mobility procedures. A partial inter RNG SNode B+ relocation may further minimize the signaling load due to frequent relocations.

The term "partial relocation" according to the present invention may be understood as a relocation of control plane functionalities from one Node B to another, while maintaining the connection to the RNG through the old Node B. Hence, data exchange between a UE and the RNG is performed via the new and previous Node B.

When speaking of a "total relocation" in the present invention, it is referred to relocation procedure of the control plane functionality from a previous Node B to a new Node B, while also the connection between the previous Node B and the RNG is released and a newly established link between the new Node B and the RNG is used to exchange data between the UE and the RNG.

A further aspect of the present invention relates to finding decision criteria, allowing a serving network element, for example a Node B providing control plane functionalities to a UE in communication, to decide whether a total or partial relocation of the control plane functionality is feasible. Further, also the switching between partial and total relocation states may be possible.

An enhanced total inter RNG SNode B+ relocation may be defined as a procedure for moving the Serving Node B+ function from one Node B+ to another with integrated radio mobility. During the relocation, the lu connection to the RNG is also moved from the Source Node B+ to the Target Node B+.

Enhanced partial inter RNG SNode B+ relocation may be defined in the same way as total relocation with a difference that the lu connection to the RNG is not moved from the Source Node B+ to the Target Node B+.

In the following, several exemplary scenarios are considered to outline the principles and ideas of the present invention. As mentioned earlier, the following various embodiment of the present invention provide exemplary scenarios which are not intended to limit the invention to these chosen exemplary scenarios. Established links via wired interfaces are illustrated by bold lines in the figures.

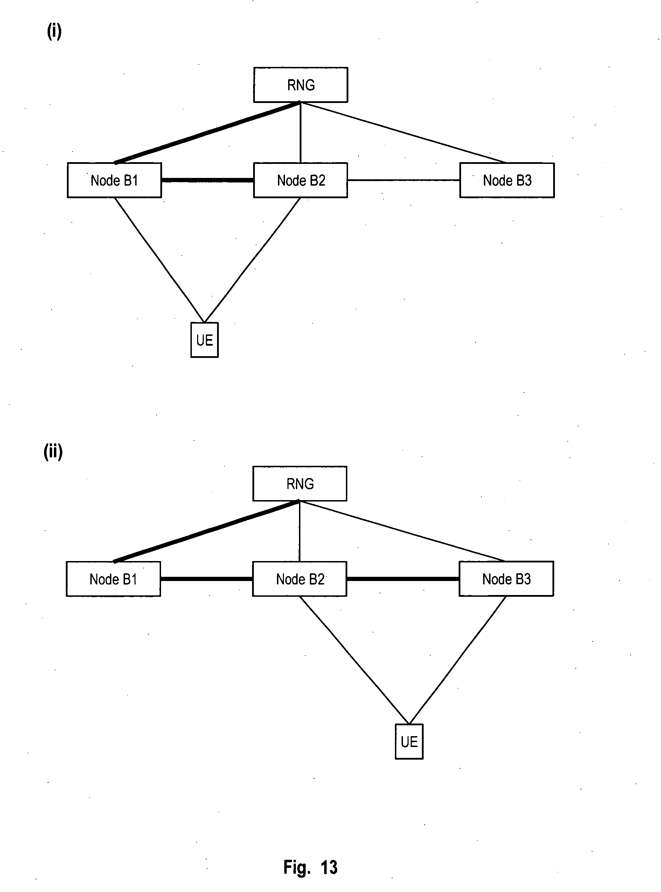

In the Fig. 13 a scenario for combined partial serving network element relocation and Active Set Update according to an exemplary embodiment of the present invention is shown.

In the upper part (i) of Fig. 13, a network configuration at the beginning of the relocation procedure, the first operating state, is shown. The UE may be in soft handover and simultaneously connected to serving Node B1 and target Node B2.

This configuration of the first operating state is also referred to for several following embodiments of the present invention that will be considered in the passages below.

Due to mobility, the network configuration may be changed as shown in the lower part (ii) of Fig. 13, the second operation state. A soft handover may be established with Node B2 and Node B3 and serving Node B role may be relocated from Node B1 to Node B2. Please note that, after the partial relocation, connection to the RNG may still be maintained via Node B1.

In this second operation state, the control plane functionality is provided through serving Node B2. Data may be exchanged between serving Node B2 and the UE as well as Node B3 and the UE during soft handover. The data may be forwarded from Node B3 to serving Node B2 via an established link for example over the lur+ interface. Thus, control plane functionality (e.g. RRC) may be successfully terminated by serving Node B2 in the second operation state. The data from the UE are not forwarded from serving Node B2 to the RNG directly but are passed to Node B1 via a further established link and are in turn forwarded to the RNG by Node B1. Of course bidirectional communication between RNG and UE may be possible, but broadcast may also be considered.

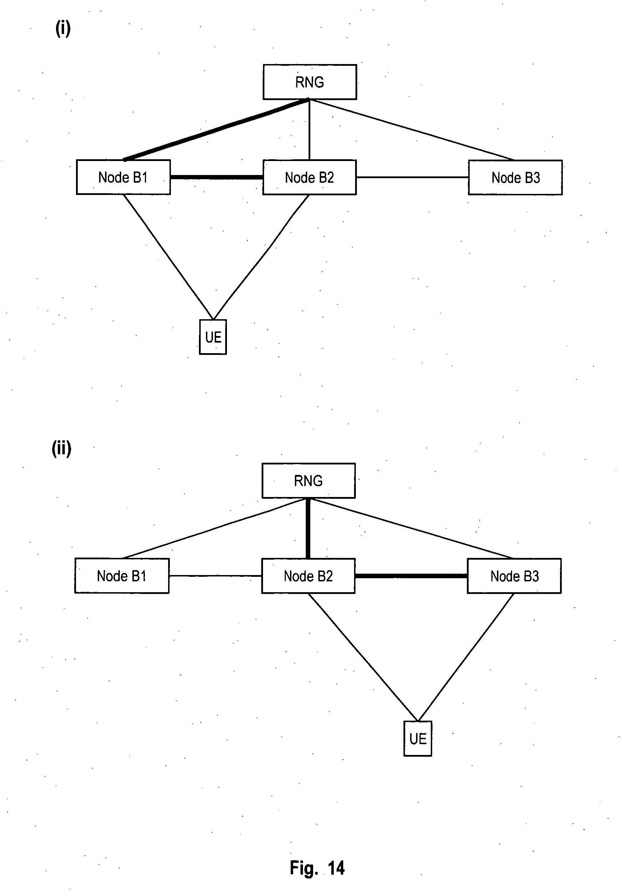

In the Fig. 14, a scenario for combined total serving network element relocation and Active Set Update according to an exemplary embodiment of the present invention is shown. The upper part (i) of Fig. 14 corresponds to the operation state as outlined in reference to Fig. 13 above.

In the second operation state illustrated in the lower part (ii) of Fig. 14, the control of control plane functionalities may be relocated from Node B1 to Node B2, after changing the configuration of the Active Set and performing relocation of serving network element. Further, the connection to the RNG may now be established via a direct link between serving Node B2 and the RNG.

In the second operation state shown in Fig. 14, the control plane functionality is provided through serving Node B2 as in the exemplary embodiment of Fig. 13. Similarly to the second operation state of Fig. 13, data may be exchanged between SNode B2 and the UE as well as target Node B3 and the UE during soft handover, and may be forwarded from target Node B3 to serving Node B2 via an established link for example over the lur+ interface. Thus, control plane functionality (e.g. RRC) may be successfully terminated by serving Node B2 in the second operation state.

Contrary to the partial relocation shown in Fig. 13, the data from the UE are forwarded by serving Node B2 to the RNG directly via an established link. Again bidirectional communication between RNG and UE may be possible, but broadcast may also be considered.

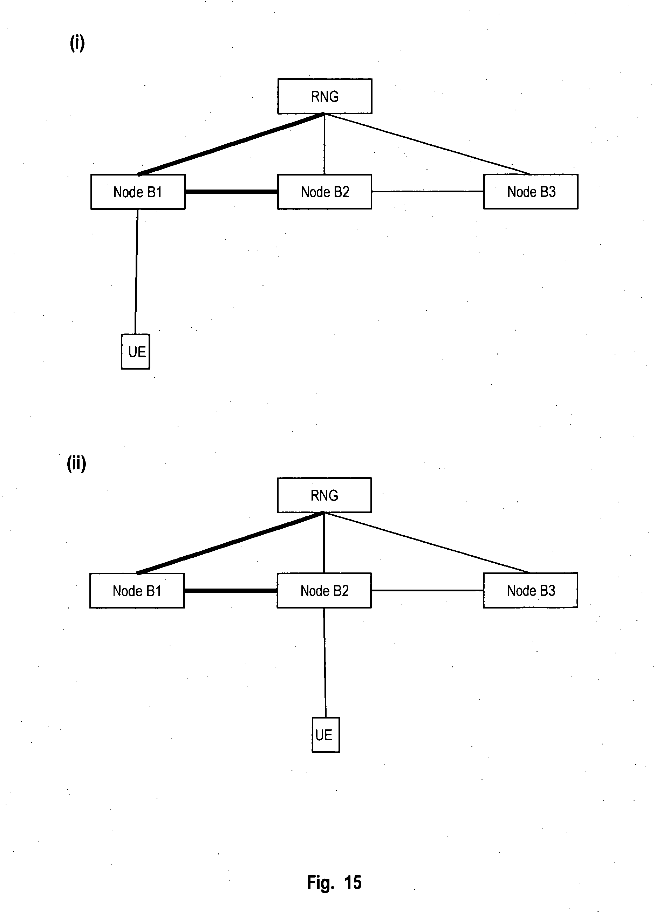

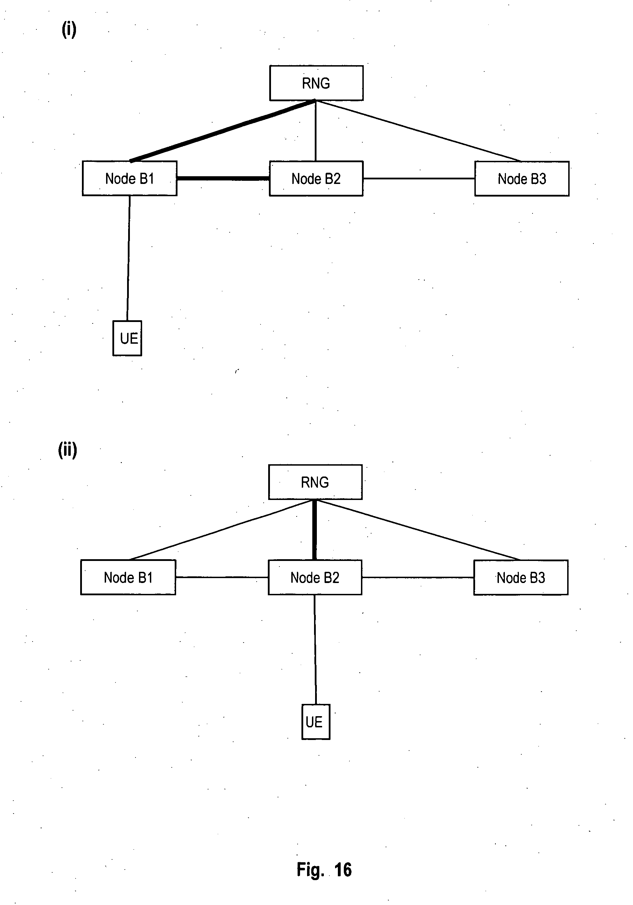

In the Fig. 15 and Fig. 16 scenarios according to embodiments of the present invention for the above outlined partial and total serving network element relocation are shown in which a hard handover and cell update procedures are employed instead of a soft handover and Active Set Update. When comparing these figures to Fig. 13 and Fig. 14, it can be noticed that only the beginning and target configuration ensuing from radio mobility have been changed while principles of partial / total serving network element relocation remained the same. The UE is firstly connected to the serving Node B1 and afterwards to the serving Node B2 (formerly target Node B2).

### Partial serving network element relocation and active set update

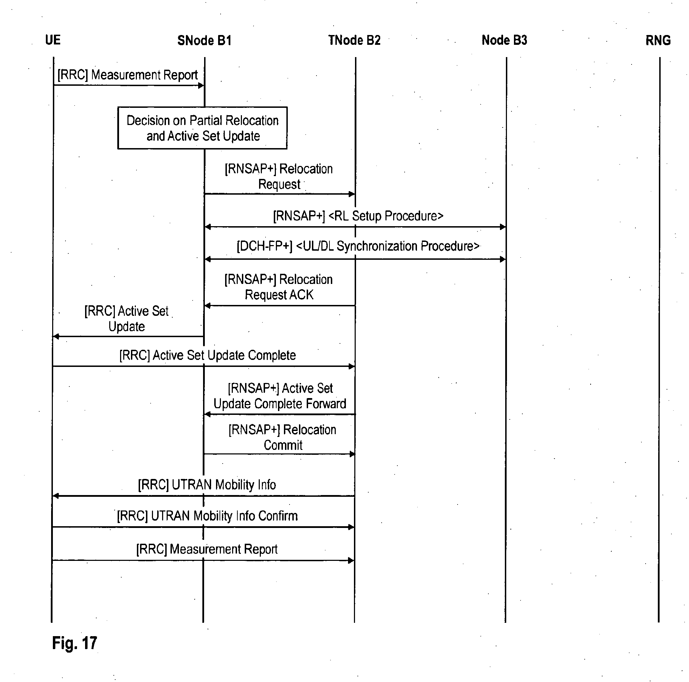

In Fig. 17 a signaling diagram for a partial serving network element relocation and active set update according to an exemplary embodiment of the present invention is shown. This figure refers to the scenario as shown in the Fig. 13. It may be noticed that the RNG is not involved in signaling thus the delay caused by the relocation procedure may be considerably reduced.

The procedure may be divided into three temporal phases: (1) Resource allocation and resource preparation, (2) Relocation Commit and (3) UTRAN Mobility Information.

In the phase (1), the serving Node B1 (SNode B1) may decide on a partial relocation of the UE (and Active Set Update) based on the measurements received from the UE, for example in a [RRC] MEASUREMENT REPORT message, and based on the impacts of the resulting topology after completing radio mobility procedures. For example, SNode B1 may consider the current signaling load on lu+/lur+ interfaces (e.g. a number of messages sent in a configurable time interval and if the number is larger than certain threshold, total relocation may be triggered).

Alternatively, SNode B1 may consider some indices on bandwidth utilization on available interfaces (for example, number of rejected Radio Link Setup Requests and if the number in a configurable time interval is higher than certain threshold, partial relocation may be triggered).

Further, a message for indicating to perform a relocation of control plane functionalities may be transmitted from the SNode B1 to TNode B2.

For example a [RNSAP+] RELOCATION REQUEST sent from the SNode B1 to the target Node B2 (TNode B2) may be used for this purpose. The [RNSAP+] RELOCATION REQUEST message may for example comprise the IE Relocation Cause, which may for example be set to 'partial enhanced relocation - resource optimization' and a Source-to-Target Node B container. The Source-to-Target Node B container may comprise parameters like UE capabilities, S-RNTI or U-RNTI, Source Node B ID, RAB info and RRC info.

Next, a link between SNode B1 and TNode B3 may be established. To establish link - e.g. via the lur+ interface - between SNode B1 and TNode B3, a [RNSAP+] <RL Setup Procedure> may be used. Synchronization between these Node Bs may be established by for example using carrier synchronization of the [DCH FP+] <DL/UL Synchronization> procedure. Synchronization is aimed at achieving timely delivery of frame protocol data units between involved network elements (see TSG RAN TS 25.402 "Synchronisation in UTRAN Stage 2", V.6.0.0 that is available on http://www.3gpp.org).

Finally, the active set of the UE may be updated. For this purpose, [RRC] ACTIVE SET UPDATE and [RRC] ACTIVE SET UPDATE COMPLETE messages may be exchanged between UE and SNode B1/TNode B2.

When performing the active set update, the UE may be in soft handover so that all messages of protocols terminated in SNode B1 may be forwarded to the network element. Therefore, the contents of the COMPLETE message may be forwarded to SNode B1 in the [RNSAP+] ACTIVE SET UPDATE COMPLETE FWD message. The content of these messages may be the same as for already explained legacy procedures.

It should be noted that messages [RNSAP+] RELOCATION REQUEST and [RNSAP+] RELOCATION REQUEST ACK may be placed anywhere in temporal sequence of the messages in this phase after decision on triggering the procedure has been made and RELOCATION REQUEST message has been sent.

At the end of phase (1), the Active Set Update may be completed and UE may be connected to TNode B2 and Node B3 (soft handover). The connection to the RNG may be maintained through SNode B1. Measurement reporting may still be done to the SNode B1 as relocation has not been finalized yet, i.e. SNode B1 may - for example - still terminate the RRC protocol.

In phase (2), relocation may be committed, for example using the [RNSAP+] RELOCATION COMMIT message transmitted from SNode B1 to TNode B2. The message may contain S-RNTI / U-RNTI, a Source Node B ID, RAB ID and PDCP sequence numbers for lossless relocation. When lossless relocation is required this may be specified in the IE Relocation Cause.

In phase (3), UTRAN Mobility Information may be provided to the UE. For this purpose a [RRC] UTRAN MOBILITY INFO message may be transmitted from the TNode B2 to the UE. The message may contain IEs with RAB ID, new U-RNTI and UL PDCP sequence number for lossless relocation. The UE may reply to this message, for example with a [RRC] UTRAN MOBILITY INFO CONFIRM message. The message may contain IEs with RAB ID and DL PDCP sequence number for lossless relocation.

Finally, the serving network element relocation is completed and measurement reporting can be done to the TNode B2. Upon having received the mobility information, the UE is informed that the control plane is now terminated in TNode B2 and may for example thus direct RRC signaling message, such as measurement reports to TNode B2.

In a variation of the signaling diagram shown in Fig. 17 the [RRC] ACTIVE SET UPDATE message may comprise both UE and CN information elements. UE Information Elements may comprise among others new SRNC identity and S-RNTI. CN Information Elements may comprise among others Location Area Identification and Routing Area Identification. In this case, the third phase of the signaling diagram may be omitted thus leading to decreased number of messages. Similar remark on merging the IEs of [RRC] ACTIVE SET UPDATE/ RADIO BEARER SETUP REQ/ UTRAN MOBUILITY INFO may also apply to other scenarios considered herein.

It has been outlined above for the UMTS Rel4 of 3GPP standardization seamless SRNS relocation by means of packet forwarding from the target network element has been standardized. The method of enhanced partial network element relocation is inherently seamless as some sort of packet "forwarding" is provided directly after completion of the Active Set Update.

When comparing the proposed enhanced relocation method shown in Fig. 17 to same in Fig. 11, it may be noticed that the delay of the radio mobility procedure (Active Set Update) is considerably reduced. Based on the numerical data provided above, it may be concluded that the delay increase in the example shown in Fig. 11 is several tens of milliseconds, which is still comparable to delays introduced by radio bearer interleaving (up to 80 ms). This delay is still significantly larger than the delay proposed by the various embodiments of the present invention.

In the method according to the embodiment of the present invention shown in Fig. 11, the Active Set Update may be finished in the resource allocation and resource preparation phase. In contrast thereto, conventional methods as for example shown in Fig. 11 complete the Active Set Update only in the second phase with relatively time-consuming signaling messages to the CN.

### Total serving network element relocation and active set update

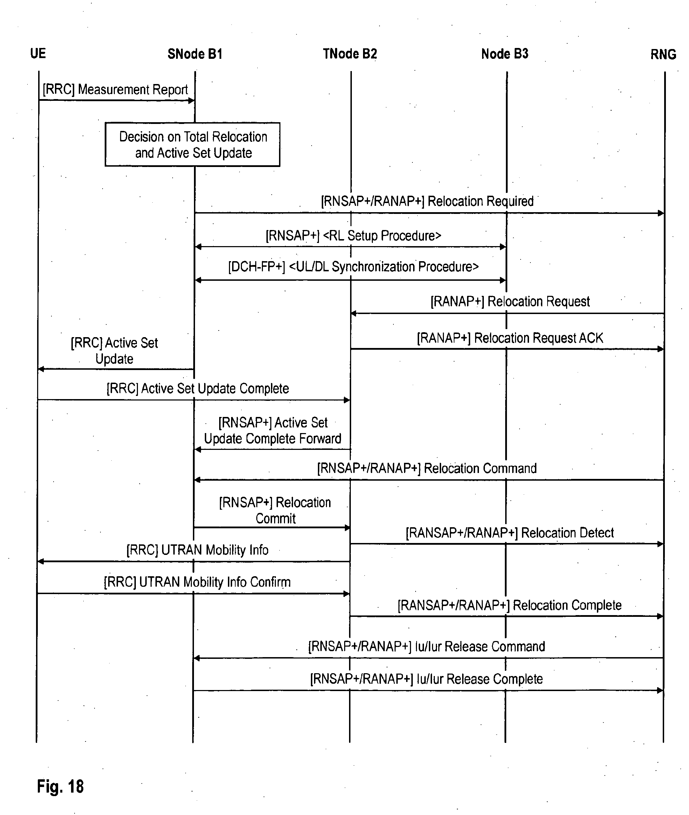

The signaling diagram of a total serving network element relocation and Active Set Update according to a further embodiment of the present invention is shown in the Fig. 18. This figure refers to the scenario given in the Fig. 14.

The diagram may be divided into five temporal phases: (1) Relocation preparation and resource allocation, (2) Relocation Commit and Relocation Detect, (3) UTRAN Mobility Information, (4) Relocation Complete and (5) lu Release. The signaling delay according to this example may be longer relative to the previous case since RNG is also involved in signaling.

When comparing total serving network element relocation according to one embodiment of the present invention to the enhanced SRNS relocation in the Fig. 11, it may be noticed that in the former procedure Active Set Update is still completed earlier (already in relocation preparation and resource allocation phase) than in conventional procedures known in the art.

In phase (1) of the signaling diagram shown in Fig. 18 - relocation preparation and resource allocation - the SNode B1 may decide to trigger total relocation based on measurement reports received from the UE, for example in a [RRC] MEASUREMENT REPORT message, and based on the impacts of resulting network topology after performing required radio mobility procedure as already mentioned above.

A message indicating that relocation is desired, for example a [RNSAP+/RANAP+] RELOCATION REQUIRED message, may be transmitted from SNode B1 to the RNG. The message may contain IEs TNode B ID, a Relocation Cause which may fore example be set to 'total enhanced relocation - resource optimization' and a Source-to-Target Node B container.

The container may contain parameters like UE capabilities, S-RNTI or U-RNTI, Source Node B ID, Target Node B ID, RAB info and RRC info.

In the meantime, a new link between SNode B1 and Node B3 may be established and synchronized by invoking [RNSAP+] <RL Setup Procedure> and [DCH-FP+] <DL/UL Synchronization Procedure>.

Next, a relocation request indicating that relocation should be performed to the target Node B may be transmitted. For this purpose a [RANAP+] RELOCATION REQUEST message may be transmitted from the RNG to the TNode B2.

The message may comprise the IEs Relocation Cause, RAB parameters (e.g. based on QoS settings obtained from the CN) and Source-to-Target Node B container.

TNode B2 may reply to this message, for example using a [RANAP] RELOCATION REQUEST ACK message which may comprise RAB parameters and Target-to-Source Node B container with S-RNTI/U-RNTI and Source Node B ID. The Active Set Update may be completed by exchanging messages [RRC] ACTIVE SET UPDATE and [RRC] ACTIVE SET UPDATE COMPLETE between UE and SNode B1/TNode B2.

Since the control plane functionality still resides in Node B1, the contents of the COMPLETE message may be forwarded to same, for example by means of a [RNSAP+] ACTIVE SET UPDATE COMPLETE FWD message. To finalize phase (1), the RNG sends [RNSAP+/RANAP+] RELOCATION COMMAND message to the SNode B1 containing RAB parameters and Target-to-Source Node B container with S-RNTI/U-RNTI and Source Node B ID. Please note that RELOCATION REQUEST/RELOCATION REQUEST ACK messages may be placed anywhere in the temporal sequence of messages in this phase based after decision on triggering the procedure has been made and RELOCATION REQUIRED message sent.

During phase (2) - Relocation Commit and Relocation Detect - SNode B1 may commit the relocation, for example by transmitting a [RNSAP+] RELOCATION COMMIT message to the TNode B2. The message may contain S-RNTI/U-RNTI and Source Node B ID; RAB ID and PDCP sequence numbers for lossless relocation. Further, TNode B2 may transmit a [RNSAP+/RANAP+] RELOCATION DETECT message to the RNG for informing the RBG that it has received request to perform relocation.

In phase (3) - UTRAN Mobility Information - the UE may be informed about the change of the serving network element. For example, a [RRC] UTRAN MOBILITY INFO message may be transmitted from TNode B2 to the UE for this purpose. The message may contain RAB ID, new U-RNTI and UL PDCP sequence number for lossless relocation. The UE may reply to this message, for example by sending a [RRC] UTRAN MOBILITY INFO CONFIRM message that may contain RAB ID and DL PDCP sequence number for lossless relocation.

During phase (4) - Relocation Complete - relocation is completed. For example a [RNSAP+/RANAP+] RELOCATION COMPLETE message my be transmitted from the TNode B2 to the RNG to inform the RNG that the data flow may now be rerouted to the TNode B2.

In phase (5) - lu Release - the "old" lu connection between the RNG and SNode B1 may be released. To release the link on the lu interface the message pair [RNSAP+] lu RELEASE COMMAND / [RNSAP+] lu RELEASE COMPLETE and [RNSAP+/RANAP+] lu/lur RELEASE COMMAND / [RNSAP+/RANAP+] lu/lur RELEASE COMPLETE may be exchanged between SNode B1 and TNode B2 and between SNode B1 and RNG, respectively. The 'command' type messages may comprise an IE named 'cause' set to 'successful total enhanced relocation'.

The total serving network element relocation combined with Active Set Update may also be inherently seamless. No data packets may have to be forwarded from the SNode B1 to the TNode B2.

It should also be noted that the delay of Active Set Update may only be slightly higher than in the previous case, due to exchange of signaling messages with RNG. However, the radio mobility procedure may still be completed in the first phase of the enhanced relocation, which reduces the total delay considerably compared to the conventional procedure described in reference to Fig. 11 above.

Moreover, the signaling load may be slightly higher relative to partial enhanced relocation described above. However, the data packets may now be routed directly from the RNG to the TNode B2 without passing them via the lur+ interface as in the previous case.

### Partial and total serving network element relocation and hard handover/cell update

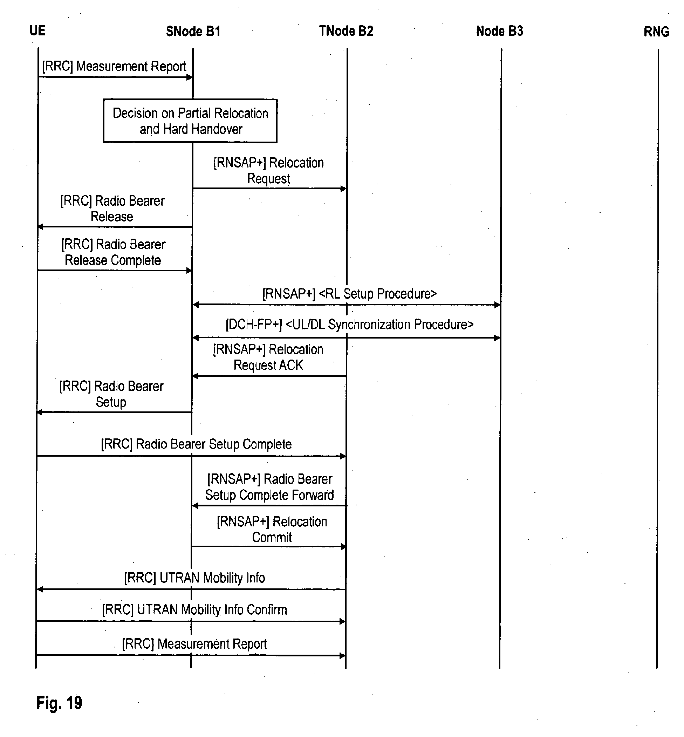

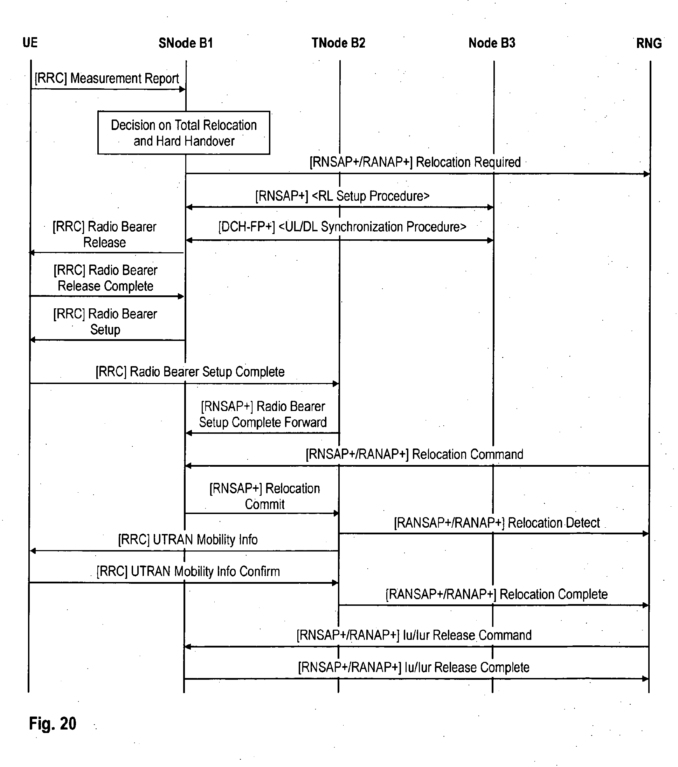

Diagrams for enhanced partial and total serving network element relocation for a hard handover or using a cell update procedure according to different embodiment of the present invention are given in Fig. 19 and Fig. 20, respectively.

The explanation of these diagrams is straightforward based on previous explanations and only the basic differences will be outlined. Moreover, the cases with Hard Handover are readily extendable for Cell Update for persons skilled in the art. It should be noted that relocation comprising Hard Handover/Cell Update may not be inherently seamless.

As explained earlier, Active Set Update, Hard Handover and Cell Update functions have in common that they may be triggered by the S-RNC based on a predefined and preconfigurable set of operations on the results of UE measurement reporting A difference between a Cell Update and a Hard Handover may be observed in the messages which are exchanged during the procedure.

During Hard Handover, the messages Radio Bearer Release/Radio Bearer Release Complete/Radio Bearer Setup may be exchanged as shown in Fig. 19 and 20. During the Cell Update these messages are replaced by sending a Cell Update message from the UE to the network and receiving a Cell Update Confirm message at the UE from the network in response.

Also the states in which the UE is in differ between Hard Handover and Cell Update. While a Hard Handover may be performed in the CELL_DCH state, a cell update may be performed in the CELL_FACH state of the RRC connected mode.

In the previous subsection partial and total serving network element relocations combined with Active Set Update/ Hard Handover/Cell Update have been explained with reference to exemplary embodiments of the present invention. The type of radio mobility to be combined with a certain relocation procedure may depend on the transport channel type used and/or the UE state. Decision on invoking partial or total relocation may depend on network implementation.

### Triggering Relocations / Relocation Causes

The benefits which may result from partial serving network element relocation are decreased signaling load and faster completion of related radio mobility procedure while the benefit of total serving network element relocation may be a better utilization of transport network layer resources relative to the total serving network element relocation.

Further new relocation causes may start a relocation procedure. For example, the serving Node B may consider the current signaling load on lu+/lur+ interfaces to determine whether it is necessary to trigger a partial or total relocation.

E.g. the serving Node B may monitor the number of messages transmitted in a configurable or predetermined time interval and if the number is larger than certain threshold, a total relocation may be triggered. Otherwise a partial relocation may be considered by the serving Node B.

An alternative criterion to use for triggering a total or partial relocation may be the bandwidth utilization on available interfaces.

For example, the serving Node B1 may consider some indices on bandwidth utilization on available interfaces. For example, the number of rejected Radio Link Setup Requests may be monitored, and if the serving Node B determines that the number or Radio Link Setup Requests within a configurable or predetermined time interval is higher than certain threshold, partial relocation may be triggered. Again, if the criterion is not fulfilled a total relocation may be triggered by the serving Node B.

The partial and total relocation procedures outlined above may be advantageously combined in an exemplary deployed network to yield an optimal trade-off of radio resource management procedures, delay and the signaling load on the network. This is possible by introducing multiple relocation causes referring to partial and total relocation in the corresponding RNSAP+/RANAP+ messages as outlined above.

## Claims

1. A method for relocating control plane functionality of a serving base station in a mobile communication system comprising a mobile terminal and a plurality of base stations, the method comprising the steps of:
establishing a first operation state, in which the mobile terminal is in soft handover involving a first base station and a second base station or in which the mobile terminal performs a hard handover or cell update from the first base station to the second base station,
establishing a second operation state, in which the mobile terminal is in soft handover involving the second base station and a third base station or in which the mobile terminal is connected to the second base station, and
transferring said control plane functionality from the first base station to the second base station, when the second operation state has been established.

2. The method according to claim 1, wherein when performing a soft handover in the first operation state or second operation state,
in the first operation state a link between the first base station and the second base station is established, and
in the second operation state a link between the second base station and the third base station is established.

3. The method according to claim 2, further comprising the step of maintaining the link between the first base station and the second base station in said second operating state.

4. The method according to claim 2 or 3, further comprising the steps of:
using a link between the first base station and a gateway to the core network of the mobile communication system in the first operating state for data exchange between the gateway and the mobile terminal and
maintaining said link to said gateway in the second operation state.

5. The method according to claim 4, further comprising the step of exchanging data between the mobile terminal and the gateway via the first base station in the first operation state and in the second operation state.

6. The method according to claim 5, wherein the links between the first base station and the second base station and the second base station and the third base station respectively are used to exchange data between the gateway and the mobile terminal via the first base station.

7. The method according to one of claims 2 to 6, further comprising the step of transmitting relocation-specific information from the first base station to the second base station.

8. The method according to claim 7, wherein the relocation-specific information is transmitted from the first base station to the second base station in a Relocation Request message of an application protocol.

9. The method according to claim 7 or 8, further comprising the steps of:
receiving at the first base station a Relocation Request Acknowledgement message of an application protocol from the second base station,
updating the active set of the mobile terminal using an Active Set Update message of the RRC protocol transmitted from the first base station to the mobile terminal,
receiving from the mobile terminal an Active Set Update Complete message of the RRC protocol at the second base station, wherein the received message informs the second base station that the active set update has been completed, and
transmitting an Active Set Update Complete Forward message of an application protocol from the second base station to the first base station informing the first base that the mobile terminal has completed the active set update.

10. The method according to claim 9, further comprising the step of transmitting a Relocation Commit message of an application protocol from the first base station to the second base station to trigger a change from the first operation state to the second operation state.

11. The method according to claim 9 or 10, wherein the Active Set Update message comprises information elements providing a Location Area Identification and/or a Routing Area Identification.

12. The method according to claim 1, wherein when performing a hard handover or cell update in the first operation state, a link between the first base station and the second base station in the first operation state is established.

13. The method according to claim 12, further comprising the step of maintaining the link between the first base station and the second base station in said second operating state.

14. The method according to claim 12 or 13, further comprising the steps of:
using a link between the first base station and a gateway to the core network of the mobile communication system established in the first operating state for data exchange between the gateway and the mobile terminal and
maintaining said link to said gateway in the second operation state.

15. The method according to one of claims 1 to 14, further comprising the step of using a Radio Link Setup procedure of an application protocol and Downlink/Uplink. Synchronization procedure a frame protocol to establish the link between the second base station and the third base station.

16. The method according to one of claims 1 to 15, further comprising the step of deciding at the first base station to perform the relocation of the control plane functionality.

17. The method according to one of claims 1 to 16, further comprising the step of:
establishing a third operation state, in which the mobile terminal is in soft handover or in hard handover from the second base station to the third base station, and wherein data between the mobile terminal and a gateway to the core network of the mobile communication system is exchanged via the second base station, and
wherein in the second operation state data between the mobile terminal and the gateway is exchanged via the first base station.

18. The method according to claim 17, further comprising the steps of:
deciding in said first base station whether to establish the second operation state, or whether to establish the third operation state,
establishing the second operation state or the third operation state based on the decision, and
wherein the control plane functionality is transferred to the second base station, when either the second or the third operation state has been established.

19. The method according to claim 18, further comprising the step of changing from the second operation state to the third operation state, if the second base station receives a relocation command from a gateway to the core network of the mobile communication system.

20. The method according to claim 18 or 19, wherein the decision to establish the second operation state or the third operation state is based on either one of or a combination of indices of the signaling load or bandwidth utilization on the link between the first base station and the second base station and the signaling load or bandwidth utilization on the connection between the first base station and the gateway.

21. A base station in a mobile communication system, comprising means adapted to perform the method according to one of claims 1 to 20.

22. A mobile communication system comprising a mobile terminal and a plurality of base stations, the system comprising:
a first base station providing control plane functionality to the mobile terminal in a first operation state, the first base station being involved in a soft handover of the mobile terminal or performing a hard handover or cell update of the mobile terminal to a second base station,
the second base station involved in the soft handover of the mobile terminal in the first operation state, the second base station in a second operation state being connected to the mobile terminal or being involved in a second soft handover of the mobile terminal, and
the first base station is adapted to transfer the control plane functionality to the second base station, when the second operation state is established.

23. The system according to claim 22, further comprising a third base station involved in the second soft handover of the mobile terminal in the second operation state.

24. The system according to claim 22 or 23, wherein when performing a soft handover in the first operation state or second operation state,
in the first operation state the first base station and the second base station are adapted to establish a link between the first base station and the second base station, and
in the second operation state the second base station and the third base station are adapted to establish a link between the first base station and the second base station.

25. The system according to claim 22, wherein when performing a hard handover or cell update in the first operation state,
in the first operation state the first base station and the second base station are adapted to establish a link between the first base station and the second base station.

26. The system according to claim 24 or 25, wherein the first base station and the second base station are adapted to maintain the link in said second operating state.

27. The system according to claim 24 or 25, wherein the first base station and the second base station are adapted to use a link between the first base station and a gateway to the core network of the mobile communication system in the first operating state for data exchange between the gateway and the mobile terminal, and
wherein the first base station is adapted to maintain said link to said gateway in the second operation state.

28. The system according to claim 27, wherein the third base station is adapted to facilitate the exchange of data between the mobile terminal and the gateway via the first base station in the second operation state.

29. The system according to claim 28, wherein the base stations are adapted to use the links between the first base station and the second base station and the second base station and the third base station respectively for exchanging data between the gateway and the mobile terminal via the first base station.
